**Europäisches Patentamt**

**European Patent Office**

**Office européen des brevets**

(11) Veröffentlichungsnummer: **0 123 865**
**A2**

(12) **EUROPÄISCHE PATENTANMELDUNG**

(21) Anmeldenummer: **84103013.3**

(22) Anmeldetag: **19.03.84**

(51) Int. Cl.³: **G 02 B 7/26**

(30) Priorität: **23.03.83 DE 3310587**

(43) Veröffentlichungstag der Anmeldung: **07.11.84**
**Patentblatt 84/45**

(84) Benannte Vertragsstaaten: **DE FR GB**

(71) Anmelder: **Siemens Aktiengesellschaft, Berlin und München Wittelsbacherplatz 2, D-8000 München 2 (DE)**

(72) Erfinder: **Mahlein, Hans F., Dr.rer.nat., Queristrasse 2, D-8025 Unterhaching (DE)**
Erfinder: **Michel, Herbert, Bacherstrasse 49, D-8000 München 90 (DE)**
Erfinder: **Reichelt, Achim, Dipl.-Phys., Queristrasse 4, D-8025 Unterhaching (DE)**
Erfinder: **Winzer, Gerhard, Dr.-Ing., Zugspitzstrasse 10, D-8011 Putzbrunn (DE)**

(54) **Lichtwellenleiterverzweigung, ihre Anwendung und Verfahren zu ihrer Herstellung.**

(57) Es wird eine Lichtwellenleiterverzweigung in Form eines Wellenlängen-Demultiplexers beschrieben, der aus zwei durch ein wellenlängenselektives Filter (4) voneinander getrennten fluchtenden Fasern (1, 2) und aus einer von diesen Fasern in Höhe des Filters (4) seitlich abzweigenden Faser (3) besteht. Es sollen zugleich ein erhöhter Koppelwirkungsgrad, Anwendbarkeit in Monomodefaserstrecken und größere Justiertoleranzen bei der Herstellung erreicht werden. Dazu wird vorgeschlagen, für die beiden fluchtenden Fasern (1, 2) Fasern verschiedenen Kerndurchmessers zu verwenden, wobei die dem Filter zuführende Faser (1) einen kleineren Kerndurchmesser als die vom Filter (4) fortführende Faser (2) aufweist. In einer Ausführungsform des Demultiplexers besteht die zuführende Faser (1) aus einer Monomodefaser und die fortführende Faser (2) aus einer Multimodefaser. Der Demultiplexer ist für faseroptische Übertragungsstrecken für unidirektionalen Betrieb zum Demultiplexen vorgesehen.

0123865

SIEMENS AKTIENGESELLSCHAFT
Berlin und München

Unser Zeichen
VPA

83 P 1 1 9 4 E

Lichtwellenleiterverzweigung, ihre Anwendung und Verfahren zu ihrer Herstellung

Die vorliegende Erfindung betrifft eine Lichtwellenleiterverzweigung nach dem Oberbegriff des Patentanspruchs 1, insbesondere einen Wellenlängen-Demultiplexer sowie ihre bzw. seine Anwendung und Herstellung.

Eine Verzweigung der genannten Art ist aus der DE-OS 29 20 957 bekannt. Derartige Verzweigungen können als Wellenlängen-Demultiplexer verwendet werden, wenn als teildurchlässige Schicht ein wellenlängenselektives Filter verwendet wird. Derartige Demultiplexer sind bereits vorgeschlagen worden.

Bei der genannten bekannten Verzweigung sind alle drei Fasern identisch, d.h. sie weisen alle den gleichen Kern- und Außendurchmesser auf. Es sind aber auch schon Verzweigungen und Demultiplexer vorgeschlagen worden, bei denen die fluchtenden Fasern Monomodefasern sind, und die abzweigende Faser eine Multimodefaser ist, die einen erheblich größeren Kerndurchmesser aufweist als die Monomodefasern. Auch muß die abzweigende Faser nicht im rechten Winkel zu den fluchtenden Fasern abzweigen, wie dies bei der bekannten Verzweigung der Fall ist, sondern es hat sich insbesondere bei Demultiplexern als zweckmäßig erwiesen, das wellenlängenselektive Filter in einem Neigungswinkel zur Faserachse anzuordnen, der größer ist als 45° und der einen Schrägverlauf der abzweigenden Faser zu den fluchtenden Fasern bedingt.

Ed 1 Sti/23.3.83

Bei den bisher bekannten oder vorgeschlagenen Verzweigungen, insbesondere Demultiplexern, bestehen die durch die teildurchlässige Schicht getrennten fluchtenden Fasern stets aus identischen Fasern. Ein Grund dafür ist darin zu sehen, daß bei der Herstellung derartiger Verzweigungen die fluchtenden Fasern durch einen Trennschritt hergestellt werden, bei dem ein Trägerkörper für Fasern und die auf ihm befestigten Fasern quer zu deren Achse durchtrennt werden und die beiden Trennteile nach Aufbringen einer teildurchlässigen Schicht auf eine der beiden entstandenen und polierten Trennflächen wieder so miteinander verbunden werden, daß die durchtrennten Fasern wieder achsfluchten und die ursprüngliche Form des Trägerkörpers wieder entsteht.

Die Vornahme einer derartigen Durchtrennung bietet sich u.a. deshalb an, weil dann die Verfahrensschritte bezüglich der Ausrichtung der Achsen der Lichtwellenleiter zueinander selbstjustierend sind. Dies bedeutet eine Vereinfachung des Herstellungsverfahrens und es ergibt sich dabei gleichzeitig eine höhere Genauigkeit und Reproduzierbarkeit (siehe dazu DE-OS 29 20 957, Seite 6, Absatz). Insbesondere die erzielbare hohe Genauigkeit ermöglicht einen hohen Koppelwirkungsgrad zwischen den identischen fluchtenden Fasern der Verzweigung und ermöglicht sogar die Herstellung von Verzweigungen, bei denen die fluchtenden Fasern aus Monomodefasern bestehen, deren Kopplung besonders enge Justiertoleranzen erfordert und bei denen dem Koppelwirkungsgrad eindeutige Grenzen gesetzt sind.

Aufgabe der vorliegenden Erfindung ist es, eine Abzweigung, insbesondere einen Wellenlängen-Demultiplexer der eingangs genannten Art zu schaffen, die bzw. der zwischen den fluchtenden Fasern einen erhöhten Koppel-

0123865

wirkungsgrad aufweist und insbesondere bei Monomodefaserstrecken anwendbar ist, und der dennoch größere
Justiertoleranzen bei der Herstellung zuläßt.

Diese Aufgabe wird durch eine Verzweigung der eingangs
genannten Art gelöst, welche die im kennzeichnenden Teil
des Patentanspruchs 1 angegebenen Merkmale aufweist.

Bevorzugte und vorteilhafte Ausführungsformen der Erfindung gehen aus den Unteransprüchen 2 bis 4 hervor. Als
besonders vorteilhaft ist die Ausführungsform nach
Anspruch 3 hervorzuheben.

Mit der erfindungsgemäßen Lösung wurde ein neuer Weg
beschritten, der in eine völlig andere Richtung weist
als das bisherige Konzept, nach dem die fluchtenden
Fasern identische Fasern sein sollen und für das nicht
nur herstellungstechnische, sondern auch anwendungstechnische Gründe sprachen. Unter diesen Gründen sind zu
nennen, daß eine Verzweigung oder ein Demultiplexer mit
identischen fluchtenden Fasern nicht nur zum Verteilen
oder Demultiplexen der zugeführten Signale eingeführt
werden kann, sondern daß ein solches Element auch als
Einkoppelelement verwendet werden kann, über das Signale
in den Übertragungskanal einkoppelbar sind. Dadurch wird
für die Eingangs- als auch für die Ausgangsseite eines
Übertragungskanals oder einer faseroptischen Übertragungsstrecke nur ein einziger Baustein benötigt, wodurch
dem allgemeinen Bestreben, ein System mit möglichst
wenig verschiedenen Elementen aufzubauen, Rechnung
getragen wird.

Im Gegensatz dazu wird bei der Erfindung bewußt von der
gleichzeitigen Verwendungsmöglichkeit der Verzweigung
oder des Demultiplexers als Einkoppelelement abgesehen.

Vielmehr sind eine erfindungsgemäße Verzweigung und ein erfindungsgemäßer Demultiplexer erfindungsgemäß nur für die Anwendung auf der Ausgangsseite einer faseroptischen Übertragungsstrecke für unidirektionale Übertragung zur Signalverteilung bzw. zum Demultiplexen vorgesehen, insbesondere nach den Ansprüchen 5 bis 7.

Von Vorteil ist dabei u.a., daß im Übertragungskanal sowohl größere Justiertoleranzen erlaubt sind, als auch ein erhöhter Koppelwirkungsgrad erhalten wird, insbesondere auch in Verbindung mit Monomodefasern.

Vorteilhaft ist es überdies, daß sich auch für eine erfindungsgemäße Verzweigung eine Stapelbauweise konzipieren läßt, wie sie aus der genannten DE-OS 29 20 957 bekannt ist, wobei jedoch wegen der nunmehr vorliegenden, nicht identischen fluchtenden Fasern eine Modifikation erforderlich ist. Zweckmäßigerweise wird bei der Herstellung einer erfindungsgemäßen Verzweigung so vorgegangen, wie es im Anspruch 8 angegeben ist.

Diese Herstellung ist insbesondere deshalb möglich, weil die unterschiedlich dicken Kerne der fluchtenden Fasern seitliche Achsversätze zulassen. Besonders unkritisch ist dabei die Kopplung einer Monomodefaser mit einer Multimodefaser.

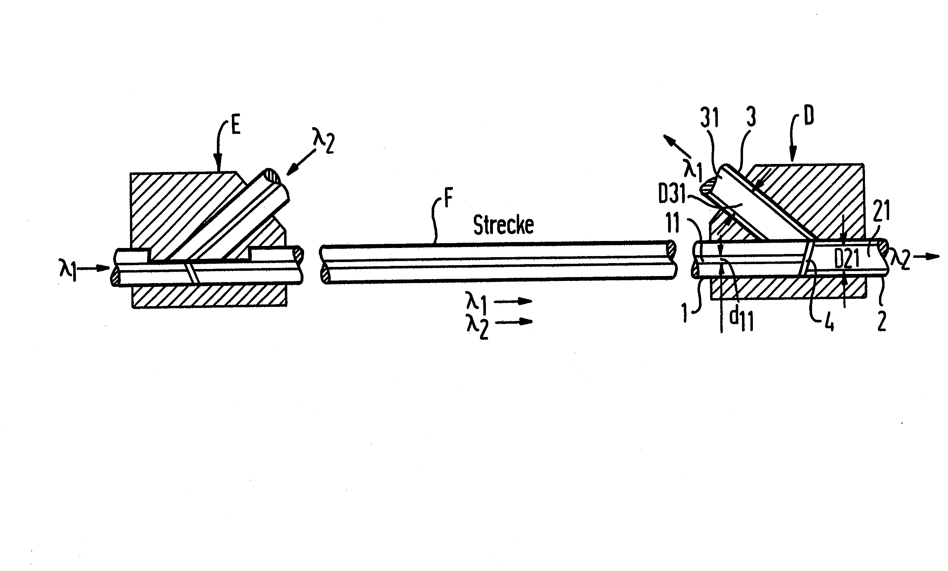

Die Erfindung wird anhand der beigefügten Figur in der folgenden Beschreibung näher erläutert.

Die Figur zeigt eine faseroptische Übertragungsvorrichtung für Zweikanalübertragung.

Die Vorrichtung besteht aus einem Einkoppelelement E,

0123865

einem erfindungsgemäßen Demultiplexer D und einer das Einkoppelelement mit dem Demultiplexer verbindenden Monomodefaser F als Übertragungsstrecke. Über das Einkoppelelement E, auf das hier nicht näher eingegangen zu werden braucht, können in die Monomodefaser F unabhängig voneinander zwei Wellenlängen $\lambda 1$ und $\lambda 2$ eingekoppelt werden, die dann zum Demultiplexer D übertragen werden.

Der Demultiplexer D besteht aus den beiden fluchtenden Fasern 1 und 2, aus einer abzweigenden Faser 3 und aus einer zwischen den beiden fluchtenden Fasern 1 und 2 schräg zu deren Achse angeordneten wellenlängenselektiven Schicht 4, die beispielsweise ein Kantenfilter in Form einer dielektrischen Vielfachschicht sein kann. Die Schicht oder das Kantenfilter 4 ist beispielsweise für die Wellenlänge $\lambda 2$ durchlässig, für die Wellenlänge $\lambda 1$ dagegen nicht.

Die der Schicht 4 die Wellenlängen $\lambda 1$ und $\lambda 2$ zuführende Faser 1 des Demultiplexers besteht aus einer Monomodefaser, die an die Monomodefaser F der Strecke gekoppelt oder mit dieser identisch ist. Der lichtführende Kern 11 der zuführenden Faser 1 weist einen Durchmesser $d_{11}$ auf, der sehr klein ist, beispielsweise höchstens 5 µ.

Die Faser 2, welche die Wellenlänge $\lambda 2$ von der Schicht 4 fortführt, besteht aus einer Multimodefaser, deren lichtführender Kern 21 einen Durchmesser $D_{21}$ aufweist, der viel größer ist, als der Durchmesser $d_{11}$ der Monomodefaser 1, beispielsweise 50 bis 100 µ.

Beide fluchtenden Fasern 1 und 2 weisen zweckmäßigerweise den gleichen Außendurchmesser auf. Dies erleichtert das Justieren der fluchtenden Fasern.

Die abzweigende Faser 3, welche die Wellenlänge $\lambda 1$ von der Schicht 4 fortführt, besteht ebenfalls aus einer Multimodefaser und ist im vorliegenden Fall identisch zur Faser 2, d.h. der Durchmesser $D_{31}$ des Kerns 31 ist gleich dem Durchmesser $D_{21}$. Außerdem weist auch die abzweigende Faser 3 den gleichen Außendurchmesser wie die beiden fluchtenden Fasern 1 und 2 auf.

Die Justierung der beiden Fasern 1 und 2 zueinander ist wegen des großen Unterschiedes zwischen dem Durchmesser $D_{21}$ und dem Durchmesser $d_{11}$ unkritisch und gewährleistet auch bei nicht genau fluchtender Justierung der Fasern 1 und 2 immer noch einen hohen Koppelwirkungsgrad für den Übergang von der Faser 1 zur Faser 2.

Bei der Herstellung des Demultiplexers D kann man von drei Blöcken ausgehen, von denen ein erster parallele Monomodefasern 1, ein zweiter parallele Multimodefasern 2 und der dritte parallele Multimodefasern 3 trägt. Sämtliche Fasern sind im gleichen Abstand zueinander angeordnet und die Blöcke werden ähnlich wie bei dem Verfahren gemäß der DE-OS 29 20 957 zusammengesetzt, so daß mehrere Faserverzweigungen nach Art der im Demultiplexer D dargestellten Verzweigung in parallel zur Zeichenebene verlaufenden Ebenen angeordnet sind.

Beispielsweise werden nach dem Aufdampfen des Filters 4 auf den die Fasern 1 oder die Fasern 2 tragenden Block zunächst diese beiden Blöcke miteinander verkittet und anschließend der die Fasern 3 tragende Block aufgekittet.

Von dem so erhaltenen Block können durch Zersägen parallel zur Zeichenebene jeweils zwischen den Fasern mehrere identische Demultiplexer D erhalten werden.

8 Patentansprüche

1 Figur

0123865

Patentansprüche

1. Lichtwellenleiterverzweigung aus einem Paar fluchtender Fasern, einer zwischen diesen und schräg zu deren Achse angeordneten teildurchlässigen Schicht und einer seitlich von den beiden fluchtenden Fasern in Höhe der dazwischenliegenden teildurchlässigen Schicht abzweigenden Faser, insbesondere Wellenlängen- Demultiplexer, d a d u r c h   g e k e n n z e i c h n e t , daß die lichtführenden Kerne (11, 21) der beiden fluchtenden Fasern (1, 2) verschiedene Durchmesser ($d_{11}$, $D_{21}$) aufweisen, wobei der Kerndurchmesser ($D_{21}$) der von der teildurchlässigen Schicht (4) fortführenden fluchtenden Faser (2) größer ist als der Kerndurchmesser ($d_{11}$) der fluchtenden Faser (1) die der teildurchlässigen Schicht (4) zuführt.

2. Verzweigung nach Anspruch 1, d a d u r c h   g e - k e n n z e i c h n e t ., daß der Durchmesser ($D_{31}$) des Kerns (31) der abzweigenden Faser (3) ebenfalls größer ist als der Kerndurchmesser ($d_{11}$) der zuführenden Faser (1).

3. Verzweigung nach Anspruch 2, d a d u r c h g e k e n n z e i c h n e t ., daß die zuführende Faser (1) eine Monomodefaser ist, und daß die fortführende fluchtende Faser (2) und die abzweigende Faser (3) eine Multimodefaser sind.

4. Verzweigung nach einem der vorhergehenden Ansprüche, d a d u r c h   g e k e n n z e i c h n e t , daß die fluchtenden Fasern (1, 2) den gleichen Außendurchmesser aufweisen.

0123865

5. Anwendung einer Verzweigung nach einem der vorhergehenden Ansprüche auf der Ausgangsseite einer faseroptischen Übertragungsstrecke für unidirektionale Übertragung zur Signalverteilung, wobei die zuführende Faser (1) der Vorrichtung mit einer Faser der Übertragungsstrecke identisch ist oder an eine Faser der Übertragungsstrecke gekoppelt ist, die höchstens den gleichen Kerndurchmesser aufweist, wie die genannte Faser der Vorrichtung.

6. Anwendung eines Wellenlängen-Demultiplexers nach einem der Ansprüche 1 bis 4 auf der Ausgangsseite einer faseroptischen Übertragungsstrecke für unidirektionale Mehrkanal-Übertragung zum Demultiplexen, wobei die der frequenzselektiven teildurchlässigen Schicht zuführende Faser des Demultiplexers mit einer Faser der Übertragungsstrecke identisch ist oder an eine Faser der Übertragungsstrecke gekoppelt ist, die höchstens den gleichen Kerndurchmesser wie die Faser des Demultiplexers aufweist.

7. Anwendung eines Wellenlängen-Demultiplexers nach Anspruch 3 oder 3 und 4 auf der Ausgangsseite einer faseroptischen Übertragungsstrecke für unidirektionale Zweikanalübertragung mittels Monomodefaser zum Demultiplexen, wobei die der frequenzselektiven teildurchlässigen Schicht zuführende Monomodefaser mit einer Monomodefaser der Übertragungsstrecke identisch oder an eine solche Faser gekoppelt ist.

8. Verfahren zur Herstellung einer Lichtwellenleiterverzweigung nach einem der Ansprüche 1 bis 4 durch Zusammensetzen von jeweils eine oder mehrere parallele Fasern tragenden Blöcken, d a d u r c h   g e k e n n - z e i c h n e t , daß die Verzweigung aus drei Blöcken zusammengesetzt wird, von denen ein erster nur die zuführenden Fasern, ein zweiter nur die fortführenden
fluchtenden Fasern mit relativ dickerem Kern und der
dritte nur die abzweigenden Fasern trägt.

E   $\lambda_2$

$\lambda_1$

F   Strecke

$\lambda_1$
$\lambda_2$

31   3   D

$\lambda_1$

D31

11

D21

21

1

$d_{11}$   4   2

$\lambda_2$

1/1

0123865